# EUROPEAN PATENT APPLICATION

(11) **EP 1 284 452 A2**
(43) Date of publication of application: **19.02.2003**
(21) Application number: 02018394.3
(22) Date of filing: 14.08.2002
(51) Int. Cl.: G06F 9/445

(54) **Client, data download method and recording medium**

(30) Priority: 15.08.2001 JP 2001246465; 14.09.2001 JP 2001279378; 19.12.2001 JP 2001385354
(71) Applicant: Square Co., Ltd., Meguro-ku, Tokyo 153-8688 (JP)
(72) Inventor: Yoshioka, Mitsuo, c/o Square Co., Ltd., Meguro-ku, Tokyo 153-8688 (JP)
(74) Representative: Grünecker, Kinkeldey, Stockmair & Schwanhäusser Anwaltssozietät

(57) **Abstract**

A client displays, on a television monitor, a web page on which a push-button (download button) having a string "DOWNLOAD" is located in accordance with a specification based on tags defined within markup text received from a server. When the download button is pressed by a user, data in the server specified by a URL is received. Then, the received data is stored in a storing area of the client, which is specified by a storing directory path.

## Description

### CROSS REFERENCE TO RELATED APPLICATIONS

The present disclosure relates to subject matter contained in Japanese Patent Application No. 2001-246465, filed on August 15, 2001, Japanese Patent Application No. 2001-279378, filed on September 14, 2001, and Japanese Patent Application No. 2001-385354, filed on December 19, 2001, the disclosures of which are expressly incorporated herein by reference in their entireties.

### BACKGROUND OF THE INVENTION

### 1. Field of the Invention

The present invention relates to a client, a data download method, and a recording medium. Specifically, it relates to performing information processing based on document data received from a server over a network.

### 2. Description of the Related Art

With the recent development of technologies relating to networks, such as the Internet, data such as computer programs, are frequently exchanged between computer systems connected to a network. For example, in a client-server system, it is typical that a program is stored in a server and is provided to multiple clients.

In this case, markup text is generally prepared in the server for receiving a request for the program download from the clients. Here, the markup text is a document written in a markup language based on the HyperText markup Language (HTML), whereby the screen display is controlled by specified various tags.

When a client accesses the server, the server transmits the markup text to the client. The client displays a web page based on the markup text received from the server by executing the browser software.

The user of the client sends or receives the data relating to a predetermined contract procedure in accordance with the guidance described in the displayed web page. Then, a desired program can be downloaded from the server to the client.

Conventionally, data is stored in a directory (current directory) in the client, which is referred when the client requests the download to the server. Therefore, when an area in which the data is to be stored is different from the current directory, the user needs to specify another directory in which the data is to be stored.

Thus, for example, when downloaded data is a program, and when the user specifies a wrong directory for storing, the program may not be executed properly. In addition, when data having the same name as that of the data to be downloaded already exists in the current directory or a storing area specified by the user, the data with the same name having already been stored therein may be overwritten.

### SUMMARY OF THE INVENTION

The invention has been made in view of these problems. It is an object of the invention to provide a client, a data download method and a recording medium, which can store downloaded data in a predetermined storing area easily and properly.

In order to achieve the object, according to one aspect of the invention, there is provided a client that receives document data written in markup language from a server over a network, stores the document data and analyzes the stored document data. The document data includes specifying information for specifying target data to be downloaded over the network and storing area information for specifying an area storing the target data. In this case, the client includes a detector that analyzes the document data and detects the specifying information and the storing area information, a requesting system that requests the server holding the target data specified by the specifying information to transfer the target data, and a storing system that stores the target data transferred from the server, in response to the request from the requesting system, in a storing area specified by the storing area information.

The storing area information may be a directory path. When the directory path detected by the detector does not exist in the storing system, the storing system may create the directory path and store the target data therein.

According to another aspect of the invention, there is provided a data download method whereby data is downloaded to a client that receives document data written in markup language from a server over a network, stores the document data and analyzes the stored document data. The document data includes specifying information for specifying target data to be downloaded over the network and storing area information for specifying an area for storing the target data. In this case, the method includes analyzing the document data and detects the specifying information and the storing area information, requesting the server holding the target data specified by the specifying information to transfer the target data, and storing the target data transferred from the server, in response to the request from the requesting system, in a storing area specified by the storing area information.

In the data download method, the storing area information is a directory path. The storing may include, when the directory path detected by the detector does not exist in the storing system, creating the directory path and storing the target data therein.

According to another aspect of the invention, there is provided a recording medium that stores a program causing processing for downloading data to be performed by a client that receives document data written in markup language from a server over a network, stores the document data and analyzes the stored document data. The document data includes specifying information for specifying target data to be downloaded over the network and storing area information for specifying an area for storing the target data. In this case the program causes the client to analyze the document data and detects the specifying information and the storing area information, to request the server holding the target data specified by the specifying information to transfer the target data, and to store the target data transferred from the server, in response to the request from the requesting system, in a storing area specified by the storing area information.

### BRIEF DESCRIPTION OF THE DRAWINGS

Fig. 1 is a block diagram showing an example of a system configuration, to which the invention is applied.
Fig. 2 is a block diagram showing a video game machine according to an embodiment of the invention.
Fig. 3 shows a configuration of a software module including a program according to an embodiment of the invention.
Fig. 4 is a flowchart showing the steps for downloading data according to an embodiment of the invention.
Fig. 5 shows an example of tags included in markup text sent from a content server group according to an embodiment of the invention.

### DESCRIPTION OF THE PREFERRED EMBODIMENT

An embodiment of the invention will be described below with reference to drawings.

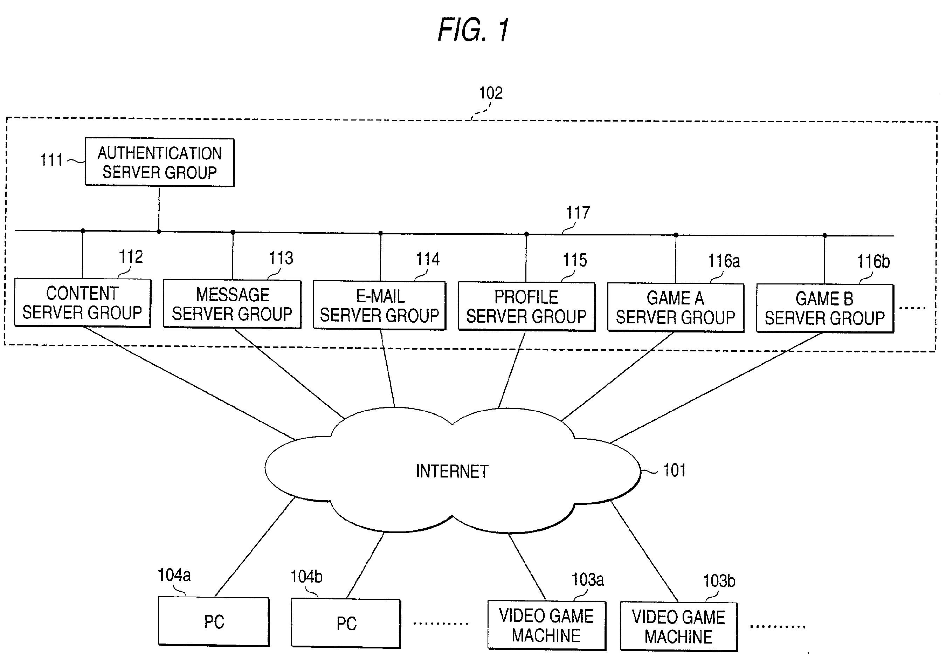

Fig.1 is a configuration diagram showing an example of a network system to which the invention is applied. A server group 102 of an Internet service provider (ISP), video game machines 103a and 103b (which may be typified by a video game machine 103 hereinafter) or generic computers 104a and 104b, all of which serve as clients, are connected to the Internet 101.

The ISP server group 102 includes multiple servers each of which functions as a WWW server. The ISP server group 102 includes an authentication server 111 for managing user accounts for user authentication and a content server 112 for providing services for viewing content such as voice and moving pictures. The ISP server group 102 further includes a message server 113 for providing environments for chatting and/or messaging. Furthermore, an e-mail server 114 is provided for providing e-mail services. A profile server 115 is also provided for managing user-profiles. Game servers 116a and 116b are provided for providing game environments. All server groups are connected with each other through a LAN 117.

With this configuration, a user can access the authentication server 111 in the ISP server group 102 from a client such as video game machines 103a and 103b and generic computers 104a and 104b via the Internet 101 for his/her authentication. The server group 102 sends a menu screen to the authenticated user. The user selects one of services displayed on the menu screen. In response to the selection, one of the video game machines 103a and 103b and the generic computers 104a and 104b is connected to one of the servers corresponding to the selected services. Thus, a user can receive various information services.

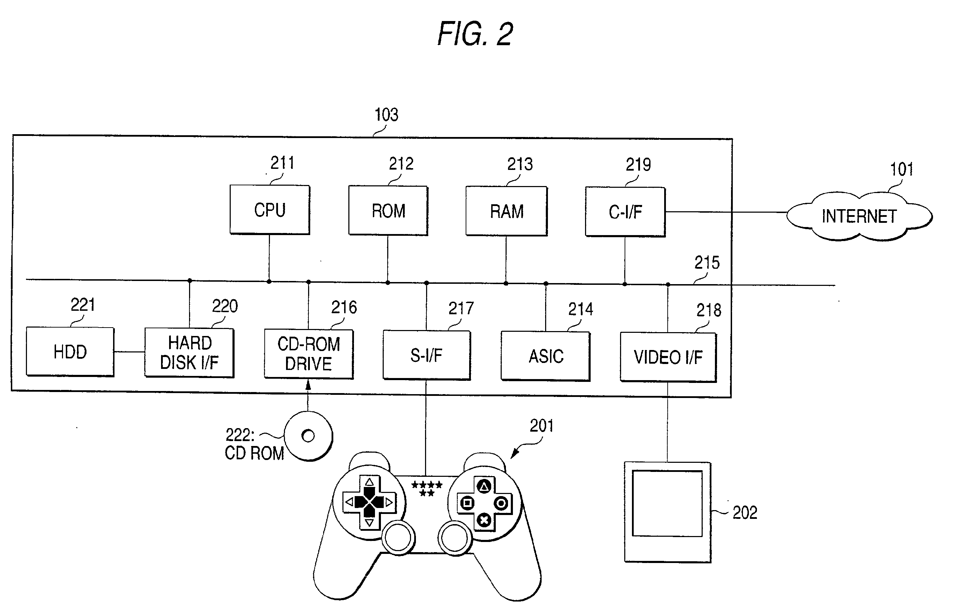

Fig.2 is a block diagram showing an example of a hardware configuration of a client according to an embodiment of the invention. It is assumed that a video game machine is used as the client in this embodiment.

A CPU 211, a ROM 212, a RAM 213 and an application-specific Integrated Circuit (ASIC) 214 are connected to a video game machine 103 via a bus 215. The CPU 211 performs overall control. Basic programs such as a BIOS are stored in the ROM 212. Game programs and/or a program for performing the data download according to an embodiment the invention are stored in the RAM 213, which is used as a temporary memory region. The ASIC 214 performs image processing.

Furthermore, a CD-ROM drive 216, a serial interface (S-I/F) 217, a video interface (VIDEO I/F) 218 and a communications interface (C-I/F) 219 are connected to the bus 215. The CD-ROM drive 216 reads a program from a CD-ROM 222 in which game programs and/or the program for performing the data download according to an embodiment of the invention are stored. The serial interface 217 is connected to a game controller 201. The video interface 218 is connected to a television monitor 202. The communications interface 219 is connected to the Internet 101. A hard disk interface 220 is connected to the bus 215. A hard disk (HDD) 221 is connected to the hard disk interface 220.

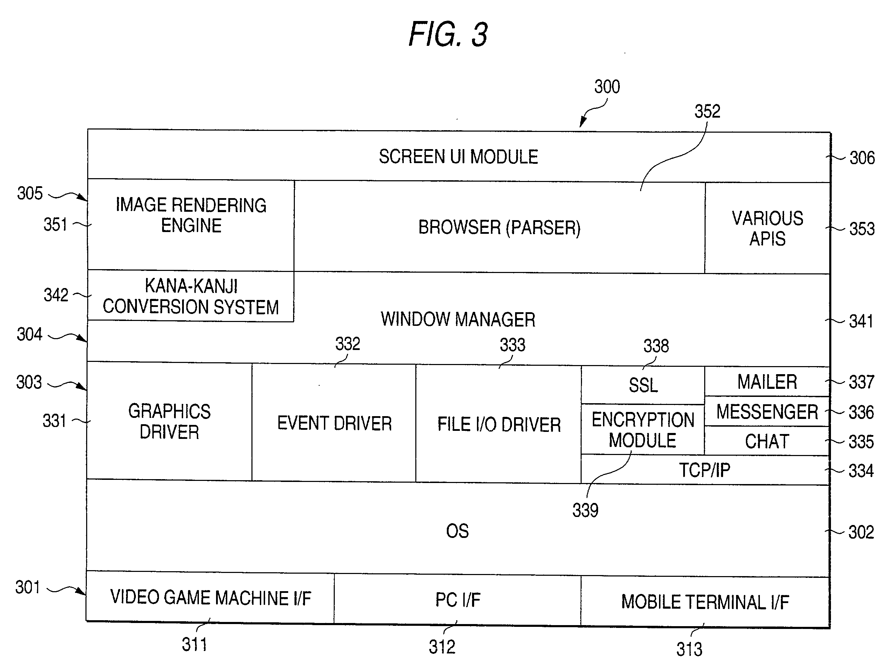

Fig.3 shows the configuration of software modules including the program for implementing the data download according to an embodiment of the invention. For example, in the video game machine 103, the CPU 211 reads out a software module 300 from a CD-ROM 222 through the CD-ROM drive 216. Upon storing the read-out software module 300 in the RAM 213, the CPU 222 executes it. Six layers from the first layer 301 to the sixth layer 306 make up the software module 300.

The first layer 301 is a physical interface and includes a video game machine IF 311, a general-purpose computer IF 312, or a mobile terminal IF 313 depending on hardware in which the software module 300 is installed. The second layer 302 is an operating system (OS).

The third layer 303 includes various drivers and a communications protocol group. The drivers include a graphics driver 331, an event driver 332 and a file I/O driver 333. The graphics driver 331 performs character plotting, line plotting, painting, scrolling and font setting. The event driver 332 obtains an event from a keypad, a keyboard or a mouse, for example. The file I/O driver 333 controls file media.

The communications protocol includes TCP/IP 334 which forms an Internet layer protocol and a transport layer protocol. The communications protocol also includes a chat protocol 335 serving as an application layer protocol, a messenger protocol 336, and mailer protocol 337. Other protocols can be used in the communications protocol. For example, UDP may be used as the transport layer protocol alternatively. Furthermore, the communications protocol group includes a Secure Socket Layer (SSL) 338 for achieving the security for the TCP/IP communications and an encryption module 339 for decoding or encoding data exchanged between a client and a server in accordance with the SSL algorithm.

The fourth layer 304 includes a window manager 341 for starting various modules and performing memory resource management and a Kana-Kanji conversion system 342 serving as FEP (Front End Processor), which system outputs Kanji (Chinese character) candidates in response to Hiragana (Japanese syllabary) inputs.

The fifth layer 305 includes an image rendering engine 351, a web page viewing browser software (parser) 352, and various application programming interfaces 353 (APIs). The image rendering engine 351 is used to draw an image created by Portable Network Graphics (PNG), Graphics Interchange Format (GIF), Joint Photographic Experts Group (JPEG), Moving Picture Experts Group (MPEG), Java (registered trademark) Script, etc. The web page viewing browser software 352 analyzes a markup language such as HyperText Markup Language (HTML) and displays a screen in accordance with tag instructions. The APIs 353 serve as interfaces for communicating with servers.

The sixth layer 306 is a screen user interface (UI) module for setting the display of various screens, dialogs, etc.

Processing performed by using the web page viewing browser software 352 will be described. The web page viewing browser software 352 receives a Uniform Resource Locator (URL) of a web page specified by a user of the client and requests one of the computer servers that has the specified URL to transfer HTML-based document information. The WWW server having received the request transfers the HTML-based source code of the specified web page to the video game machine 103. The video game machine 103 stores the received HTML in the RAM 213. The parser 352 analyzes the stored HTML-based file and displays the display portion on the television monitor 202. When link information for data such as an image exists in the HTML-based document file, the WWW server is requested to download the data. The WWW server downloads the requested data to the requesting client.

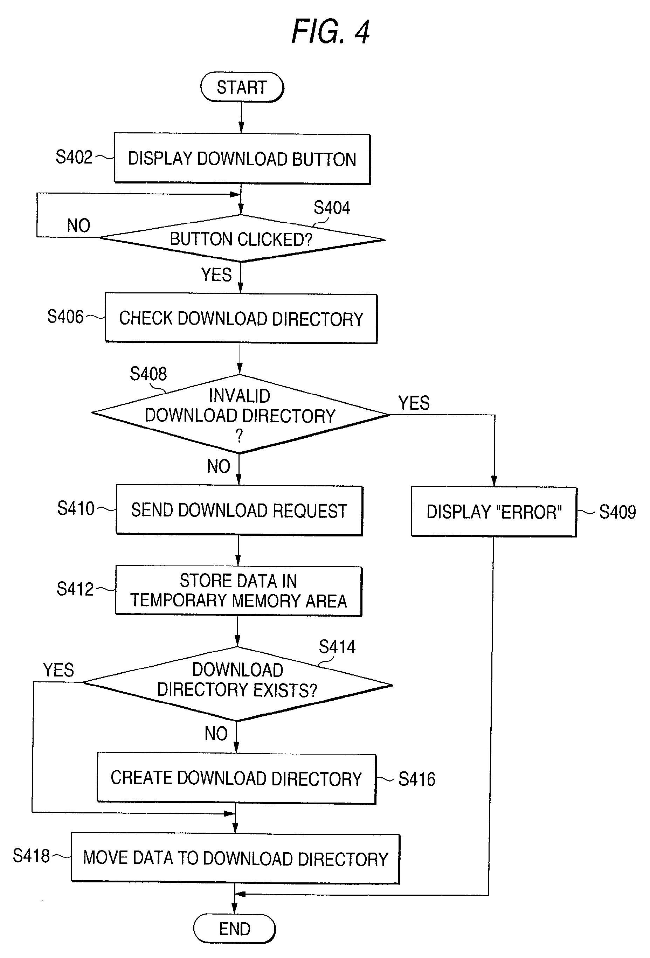

Next, with reference to a flowchart in Fig.4, the data download according to an embodiment of the invention will be described by using an example where content stored in the content server 112 is downloaded.

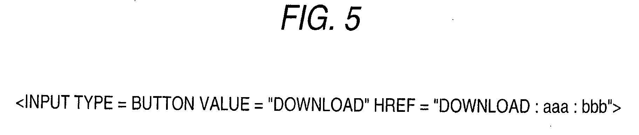

The video game machine 103 accesses the content server 112. Then, the content server 112 sends to the video game machine 103 the HTML-based text including a tag shown in Fig.5. The tag shown in Fig.5 defines locating, on a web page displayed in the client, a push-button (download button) having a string, "DOWNLOAD". Furthermore, the tag defines transferring data stored in the content server 112 specified by URL "aaa", to the download destination in the client specified by a storing directory path "bbb", when the download button is pressed. The URL "aaa" is an example of specifying information, and the storing directory path "bbb" is an example of storage information.

The video game machine 103 analyzes the HTML-based text received from the content server 112. Then, the web page including the download button is displayed (step S402). When the user of the video game machine 103 manipulates the controller 201 to click the download button (YES route at step S404), it is checked whether the storing directory path to the download destination based on the HTML-based text is valid (step S406). More specifically, this check is achieved by referring to the system files to determine whether the specified storing directory path directs to an area into which the user can write data, or whether a new directory path can be created when the specified storing directory path does not exist. When the download button is not clicked, the processing does not proceed to the next step (No route at step S404).

Next, if the storing directory path to the specified download destination is determined as invalid as a result of the check (YES route at step S408), a notice that a problem occurs is displayed on the television monitor 202 and the processing ends (step S409).

On the other hand, if the specified storing directory path is valid (NO route at step S408), the URL "aaa", is specified to the content server 112 in order to request the data download (step S410). In response to the request, the video game machine 103 stores data transferred from the content server 112 in a temporary memory area in the RAM 213 (step S412).

Next, the video game machine 103 determines whether the storing directory path "bbb" to the download destination specified by the tag exists in the hard disk 221 (step S414). If not, a storing directory path to the download destination is created in the hard disk 221 (a step S416). The data stored in the temporary memory area is moved to the directory in the hard disk 221, which is the download destination specified by the storing directory path "bbb" (step S418). On the other hand, if the storing directory path "bbb" exists in the hard disk (YES route at the step S414), the data stored in the temporary memory area is moved to the directory in the hard disk 221, which is the download destination specified by the storing directory path "bbb" (step S418).

By performing this processing, the transferred data can be stored properly in a memory area described in markup text in the client. Because game machine users may be less familiar with hard disks and/or the storing method than users of personal computers in general, the processing of the present invention is effective for game machine users.

While preferred embodiments of the invention have been described above, it is not intended to limit the invention to the described embodiments. It is apparent that various other embodiments may be implemented.

For example, HTML is used as the markup language for describing a web page in the above-described embodiment. However, the invention may be applied to other markup languages such as Extensible Markup Language (XML) and Standard Generalized Markup Language (SGML) which can use control code to describe various attribute information other than character string code.

Also, other information processing apparatuses that can communicate with the ISP servers can be used as the client of the invention. Therefore, in addition to the above-described embodiment, the invention can be applied to the information processing apparatuses such as cellular phones and PDAs having the Internet connection function.

The Internet 101 may be a communications network, such as a Local Area Network (LAN), a public switched telephone network, and a communications circuit using a communications satellite, preferred by a system user in accordance with the application.

In the above-described embodiment, the ISP server is the information processing apparatus having different functions, which is connected to the LAN 117. However, it is obvious for those skilled in the art that the multiple functions included in the ISP server can be implemented by a single information processing apparatus.

In the above-described embodiment, an absolute directory path is specified as the storing area information. However, for example, a relative position of a storing directory with respect to the predetermined directory may be specified. Alternatively, a directory for storing a predetermined program may be specified. In addition, a relative position with respect to the directory in which the predetermined program is stored may be specified. Thus, data can be stored in the proper directory. For example, when a certain program can use only data in the same directory, data can be stored in the directory that the certain program requires.

The invention can be implemented by using one or more computer programs, which can be executed in a client computer having processors connected to receive and send data and instructions from/to a recording medium, an input device and an output device. The computer programs may be written in a high-level procedure type programming language, an object-oriented programming language, assembly language, machine language, and so on.

Although, the invention has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

As described above, according to the embodiment, downloaded data may be stored in a predetermined storage area easily and properly.

## Claims

1. A client that receives document data written in markup language from a server via a network, stores the document data and analyzes the stored document data, which document data includes specifying information for specifying target data to be downloaded via the network and storing area information for specifying an area for storing the target data, the client comprising:
a detector that analyzes the document data to detect the specifying information and the storing area information;
a requesting system that requests the server holding the target data specified by the specifying information to transfer the target data; and
a storing system that stores the target data transferred from the server, in response to the request from the requesting system, in the storing area specified by the storing area information.

2. The client according to claim 1, wherein the storing area information comprises directory path information, and when the directory path, which corresponds to the directory path information, is detected by the detector and does not exist in the storing system, the storing system creates the directory path and stores the target data in a directory specified by the directory path information.

3. A data download method for downloading data to a client that receives document data written in markup language from a server via a network, stores the document data and analyzes the stored document data, which document data includes specifying information for specifying target data to be downloaded via the network and storing area information for specifying an area for storing the target data, the method comprising:
analyzing the document data to detect the specifying information and the storing area information;
requesting the server holding the target data specified by the specifying information to transfer the target data; and
storing the target data transferred from the server, in response to the request from the requesting system, in the storing area specified by the storing area information.

4. The data download method according to claim 3, wherein the storing area information comprises directory path information, and the storing comprises, when a directory path, which corresponds to the directory path information, is detected by the detector and does not exist in the storing system, creating the directory path and storing the target data in a directory specified by the directory path information.

5. A recording medium on which is recorded a program for causing a client to download data, which client receives document data written in markup language from a server via a network, stores the document data and analyzes the stored document data, in which the document data includes specifying information for specifying target data to be downloaded via the network and storing area information for specifying an area for storing the target data, the program causing the client to execute:
analyzing the document data to detect the specifying information and the storing area information;
requesting the server holding the target data specified by the specifying information to transfer the target data; and
storing the target data transferred from the server, in response to the request from the requesting system, in the storing area specified by the storing area information.
